# EUROPÄISCHE PATENTANMELDUNG

(11) **EP 0 952 089 A1**
(43) Veröffentlichungstag der Anmeldung: **27.10.1999**
(21) Anmeldenummer: 99107722.3
(22) Anmeldetag: 19.04.1999
(51) Int. Cl.: B65D 45/18

(54) **Mehrweg-Menüschale**

(30) Priorität: 23.04.1998 DE 19818187
(71) Anmelder: Schuster, Walter, 65385 Rüdesheim (DE)
(72) Erfinder: Schuster, Walter, 65385 Rüdesheim (DE)
(74) Vertreter: Zwirner, Gottfried, Dipl.-Ing. Dipl.-W.-Ing.

(57) **Zusammenfassung**

Die Erfindung betrifft eine Mehrweg-Menüschale, deren Einzelteile einfach aufgebaut, einfach zu reinigen und gegebenenfalls einfach zu ersetzen sind. Dazu weist die Mehrweg-Menüschale folgende Merkmale auf:
einen Teller (1) aus wärmebeständigem, kratzfestem Material zur Aufnahme von Speisen;
einen Deckel (5) zum Verschließen des Tellers;
der Teller (1) weist einen umlaufenden Tellerrand (2) auf, an dem eine Schrägfläche (4) in den Speiseaufnahmeraum hineinführt,
   der Deckel (5) weist einen umlaufenden Deckelrand (6) und eine Eingriffsrippe (8) auf, die an der Schrägfläche des Tellers anliegt, wenn die Mehrweg-Menüschale geschlossen ist.
   Die Mehrweg-Menüschale ist gekennzeichnet durch
wenigstens eine Klammer (10) zum lösbaren Zusammenhalt von Teller (1) und Deckel (5), die aus wärmebeständigem, kratzfestem Material besteht und folgende Ausbildung hat:
eine Halteplatte (11) mit Befestigungshaken (12);
eine Bügelfeder (15), die integral mit einem Längsrand (13) der Halteplatte (11) verbunden ist und einen asthaken (16) aufweist, der bei gespannter Bügelfeder (15) unter den Tellerrand (2) greift, um Teller und Deckel zusammenzupressen.

## Beschreibung

Die Erfindung bezieht sich auf eine Mehrweg-Menüschale mit den Merkmalen des Oberbegriffs des Anspruchs 1.

Zur Vermeidung der Abfallberge kommen Mehrweg-Menüschalen häufiger zum Einsatz, um entweder frisch zubereitete Mahlzeiten dem Verbraucher zuzuleiten oder tiefgefrorene Ware zu enthalten, die am Ort des Verbrauchs, z. B. durch Mikrowelle, aufgetaut und erhitzt werden. Bei solchen Mehrwegmenüschalen spielt die Reinigung eine bedeutsame Rolle, weswegen einfache Formen von großer Bedeutung sind. Daneben spielt auch die einfache Handhabung eine bedeutende Rolle.

Der Erfindung liegt deshalb die Aufgabe zugrunde, eine Mehrweg-Menüschale anzugeben, deren Einzelteile einfach aufgebaut, einfach zu reinigen und gegebenenfalls einfach zu ersetzen sind.

Die gestellte Aufgabe wird aufgrund der Merkmale des Anspruchs 1 gelöst und durch die weiteren Merkmale der Unteransprüche ausgestaltet und weiterentwickelt.

Im einzelnen gibt es einen Teller, der gleichzeitig Anwärmgefäß ist, und einen Deckel, der das Gefäß ausreichend dicht abschließt und am Teller geklammert wird. Zu diesem Zweck sind zwei Klammern an sich gegenüberstehenden Rändern des Deckels vorgesehen, die den Rand des Tellers untergreifen und den Deckel festziehen. Die Klammern bestehen aus einer Art Bügelfeder mit Halteplatte, die in einen Schlitz am Deckel eingeschoben und hinter einem Haltesteg durch Einrasten befestigt wird. Der Bügel weist einen Betätigungsfortsatz auf, wobei die beiden sich gegenüberstehenden Klammern mit ihren Betätigungsfortsätzen auf der Unterseite des Deckels eine Art Einführungstrichter bilden, wenn der Deckel auf den Rand des Tellers gesetzt und angedrückt wird. Dabei schnappen die Rasthaken der Bügelfeder hinter dem Rand des Tellers ein und ziehen den Deckel gegen den Teller.

Die Erfindung wird anhand der Zeichnung beschrieben. Dabei zeigt:
- Fig. 1: einen Deckel, von der Unterseite gesehen,
- Fig. 2: einen Teller und
- Fig. 3: eine vergrößerte Einzelheit aus Fig. 2, in auseinandergezogener Darstellung.

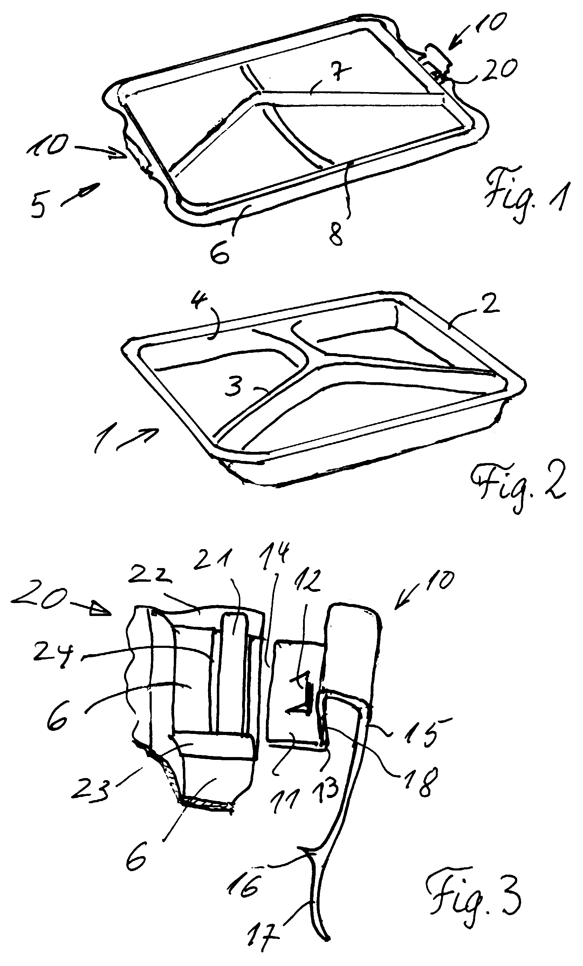

In Fig. 2 ist ein Teller aus wärmebeständigem, im wesentlichen abriebfesten Material, vorzugsweise einem Duroplast, perspektivisch dargestellt, der einen umlaufenden Rand 2 sowie Rippen 3 zur Unterteilung des Gefäßraumes des Tellers aufweist. Die Gestaltung des Deckels 5 (Fig. 1) korrespondiert zu dem des Tellers 1, d.h. es sind ein umlaufender Rand 6 und Rippenausbildungen 7 vorgesehen, die mit den Teilen 2 und 3 des Tellers 1 zusammenarbeiten. Am Deckel 5 ist ferner eine umlaufende Eingriffsrippe 8 vorgesehen, die mit einer umlaufenden Schrägfläche am Übergang zwischen Tellerrand 2 und Tellerinnerem zusammenarbeitet, so daß der Deckel 5 unverrutschbar auf dem Teller 1 gehalten werden kann. Die Haltekraft wird durch zwei Klammern 10 aufgebracht, die etwa in der Mitte des kurzen Randes des Deckels 5 angebracht sind.

Fig. 3 zeigt die näheren Einzelheiten der Klammer 10 und der Ausbildung 20 am Deckel 5 zur Befestigung der Klammer. Die Klammer 10 weist eine Halteplatte 11 mit Befestigungshaken 12 und eine Bügelfeder 15 auf, die integral mit einem Längsrand 13 der Halteplatte verbunden ist. Die Bügelfeder weist einen Rasthaken 16 und einen Betätigungsfortsatz 17 auf, wodurch insgesamt eine S-Form oder im Hinblick auf den Haken 16 eine C-Form im Querschnitt gebildet wird. Die Klammer 10 ist vorzugsweise aus einem Thermoplast hergestellt.

Die Halteausbildung am Deckelrand 20 besteht aus einem Haltesteg 21, der mittels Stegwangen 22 und 23 im bestimmten Abstand über der Ebene des Deckelrandes 6 gehalten wird, nämlich entsprechend der Dicke der Halteplatte 11. Aus Herstellungsgründen ist eine Aussparung 24 im Deckelrand 6 unterhalb des Haltesteges 21 angebracht, jedoch bilden die Unterseite des Haltesteges 21 und die Oberseite des Deckelrandes 6 einen Schlitz, durch den die Halteplatte 11 eingeführt wird. Die Bügelfeder 15 bildet einen Anschlag 18 zur Vorderseite des Haltesteges 21, und der Abstand zu dem Befestigungshaken 12 ist so gewählt, wie die Breite des Haltestegs 21. Dadurch wird die Halteplatte in dem Schlitz unterhalb des Haltesteges 1 fest eingeklemmt, wenn die Klammer mit dem Längsrand 14 voran in den Schlitz bis auf Anschlag am Bereich 18 geschoben wird. Die Bügelfeder 15 reicht somit von der Deckeloberseite seitlich am Deckel nach unten, und wenn der Deckel mit Auflage auf dem Teller 1 nach unten gedrückt wird, rutscht der untere Teil 17, 16 der Bügelfeder entlang der äußeren Kante des Tellerrandes 2, wodurch die Bügelfeder 15 gespreizt wird und schließlich mit dem Rasthaken unter den Tellerrand 2 einfällt. Dadurch wird der Deckel sicher auf dem Teller gehalten.

Sollte die Bügelfeder 10 beschädigt werden, kann diese leicht ausgetauscht werden, indem der Befestigungshaken 12 niedergedrückt und die Klammer aus dem Schlitz am Deckel herausgezogen wird.

## Patentansprüche

1. Mehrweg-Menüschale mit folgenden Merkmalen:
ein Teller (1) aus wärmebeständigem, kratzfestem Material zur Aufnahme von Speisen;
ein Deckel (5) zum Verschließen des Tellers;
der Teller (1) weist einen umlaufenden Tellerrand (2) auf, an dem eine Schrägfläche (4) in den Speiseaufnahmeraum hineinführt,
der Deckel (5) weist einen umlaufenden Deckelrand (6) und eine Eingriffsrippe (8) auf, die an der Schrägfläche des Tellers anliegt, wenn die Mehrweg-Menüschale geschlossen ist;
gekennzeichnet durch:
wenigstens eine Klammer (10) zum lösbaren Zusammenhalt von Teller (1) und Deckel (5), die aus wärmebeständigem, kratzfestem Material besteht und folgende Ausbildung hat:
eine Halteplatte (11) mit Befestigungshaken (12);
eine Bügelfeder (15), die integral mit einem Längsrand (13) der Halteplatte (11) verbunden ist und einen Rasthaken (16) aufweist, der bei gespannter Bügelfeder (15) unter den Tellerrand (2) greift, um Teller und Deckel zusammenzupressen.

2. Mehrweg-Menüschale nach Anspruch 1,
dadurch gekennzeichnet,
daß die Bügelfeder (15) einen Betätigungsfortsatz (17) aufweist und so insgesamt einen S-förmigen Querschnitt darbietet.

3. Mehrweg-Menüschale nach Anspruch 1 oder 2,
dadurch gekennzeichnet,
daß der Deckel (5) einen sich parallel zum Deckelrand (6) erstreckenden Haltesteg (21) aufweist, der zur Deckelrandebene einen Schlitz bildet, durch den die Halteplatte (11) geschoben werden kann, um den Befestigungshaken (12) hinter den Haltesteg (21) einrasten zu lassen.

4. Mehrweg-Menüschale nach Anspruch 3,
dadurch gekennzeichnet,
daß der Befestigungshaken (12) aus einem hochragenden Lappen des Wandmaterials der Befestigungsplatte (11) besteht.

5. Mehrweg-Menüschale nach einem der Ansprüche 1 bis 4,
dadurch gekennzeichnet,
daß der Teller (1) und der Deckel (5) der Mehrweg-Menüschale aus einem Duroplast bestehen und die Klammer (10) aus einem Thermoplast hergestellt ist.
